# EUROPEAN PATENT APPLICATION

(11) **EP 1 189 407 A2**
(43) Date of publication of application: **20.03.2002**
(21) Application number: 01121621.5
(22) Date of filing: 11.09.2001
(51) Int. Cl.: H04L 29/06, G06F 1/00

(54) **Client-server system with securita function intermediary**

(30) Priority: 11.09.2000 JP 2000274589
(71) Applicant: NEC CORPORATION, Tokyo (JP)
(72) Inventor: Ono, Masahiro, Minato-ku, Tokyo (JP)
(74) Representative: VOSSIUS & PARTNER

(57) **Abstract**

An intermediary device ensuring high security and lightening load on a client in a client-server system is disclosed. The intermediary device is provided between the server and the client. The intermediary device has a management table (403, 404) for storing security information indicating at least one of server authentication (408), client authentication (409) and encryption and decryption (410), and session information regarding a session formed between the server and the client. The intermediary device performs appropriate security operation depending on a received message on behalf of the client.

## Description

The present invention relates to client-server communication techniques using a security protocol, and in particular to an intermediary device, method, and program for the security protocol.

In a client-server system using a security protocol, server authentication at a client, client authentication at a server, and data encryption at both client and server are performed to prevent eavesdropping, tampering, or message forgery, achieving secure communication between two parties.

As an example of such a client-server data communication system, there has been available a system using: SSLv2, SSLv3 (Secure Socket Layer version 2, version 3, see http://home.netscape.com/eng/ss13/index.html) or TLSv1 (Transport Layer Security Protocol version 1.0, see http://www.ieft.org/rfc/rfc2246.txt); and HTTP/1.1 (Hyper Text Transfer Protocol/1.1, see http://www.ieft.org/rfc/rfc2068.txt). The TLS protocol itself is based on the SSL 3.0 Protocol Specification as published by Netscape Communication Corporation.

A conventional security providing system will be described taking as an example the TLS Protocol providing connection security. According to the TLS Protocol, the Handshake procedure is performed to exchange parameters necessary for session and connection before starting the session. When a first handshake has been completed, the session and a single connection included therein are concurrently established. A session may have a plurality of connections included therein.

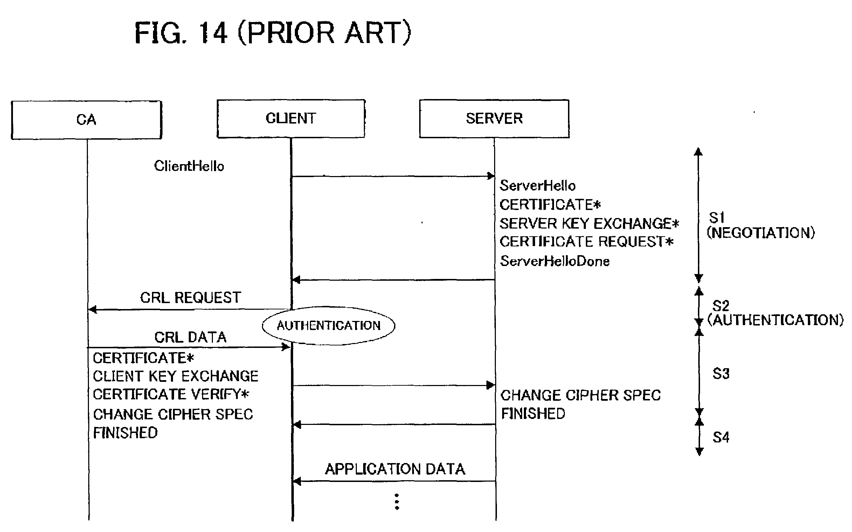

More specifically, as shown in Fig. 14, when a client wants to start communication using TLS or is requested by a server, a negotiation step S1 for exchanging necessary parameters is performed before exchanging data with the server.

In the negotiation step S1, the client sends a ClientHello message to the server to inform the server of starting TLS Handshake procedure. The ClientHello message includes a list of encryption and compression systems supported by the client. When receiving the ClientHello message from the client, the server sends a ServerHello message back to the client. The ServerHello message includes a Session ID assigned to the present session and a selected system from the client-supported encryption and compression systems included in the ClientHello message. Accordingly, the ServerHello message informs the client of the encryption and compression system to be used between the server and the client. In addition, the server uses Certificate, ServerKeyExchange, CertificateRequest, and ServerHelloDone messages to inform the client of X.509 certification and the like including a server public key that is a parameter to be determined before exchanging data with the client.

When the negotiation step S1 has been completed, the client performs an authentication step S2 to determine whether the certification received from the server is valid. The timing of the authentication is not defined by the TLS Protocol. The authentication step S2 is performed by requesting CRL (Certification Revocation List) from the CA (Certificate Authority) that issued that certification, or using OCSP (Online Certificate Status Protocol, see http://www.ieft.org/rfc/rfc2560.txt). Here, the CRL requesting method is employed to perform the authentication step S2.

The client sends a CRL request to the CA and then downloads CRL data from the CA, The client determines whether the certification of the server is included in the CRL received from the CA. When found, it is determined that the certification of the server has been revoked and the client sends an alert message to the server. When the certification of the server is not included in the CRL, it is determined that the certification of the server is valid and then the next step S3 is started.

In the step S3, the client uses ClientKeyExchange, ChangeCipherSpec, and Finished messages to exchange a public key required for encryption and decryption and then send a test message encrypted using the public key to the server so that the server check whether encryption and decryption are successfully performed. Similarly, in the step S4, the server uses Changecipherspec and Finished messages to send a test message encrypted using the public key to the client so that the client check whether encryption and decryption are successfully performed. In this manner, the Handshake procedure is completed.

When a new connection is requested after a session has been established, the client sends ClientHello message including the same session ID to the server to establish the new connection. The server sends ServerHello message including the same session ID back to the client and then exchanges messages according to the encryption and its key that have been already determined under mutual agreement. In this manner, the new connection is established.

In the case where an intermediary device is connected between the server and the client, it is possible to ensure a TLS secure connection between the intermediary device and the server by using Delegate (http://www.delegate.org/delegate/) using OpenSSL (http://www.openssl.org/).

However, the above-mentioned conventional client-server system has the following disadvantages.
1) The conventional system may substantially reduce the efficiency of communication in application level. As described above, various messages are exchanged between client and server and between client and CA regardless of the communication environment of the client and server. In addition, since these messages are transferred when each session is started, the conventional security function becomes overheads of all sessions. Accordingly, the efficiency of communication may be reduced by a large amount depending on the communication environment such as transmission error between the client and server and the communication condition of the session.
   Especially, in the case where data communication is made between a server on the Internet and an Internet-enabled mobile phone as a client via an Internet Service Provider (ISP), the bandwidth of a communication line between the client and the ISP is much smaller than an available bandwidth between the server and the ISP. In such an environment, the efficiency of communication in the application level becomes lower as the size of CRL required for server authentication at the client becomes longer relative to the size of data transferred between applications of the client and server. When the efficiency of communication has been reduced, the time elapsed between starting and terminating the session becomes longer from the view point of the client. Especially, when the bandwidth between the client and the ISP is narrow as in the case of mobile telephone system, such a tendency is accelerated. Further, in the case of billing a client by the hour and/or the number of packets during data communication between the client and the ISP, the total amount billed is increased.
2) When the client supports the security protocol. delay caused by encryption and decryption at the client may affect the throughput of the network because such encryption and decryption necessary for security are needed even if the processing power of the client is low.
3) When the common encryption and compression system is not provided in both the client and server, secure communication cannot be achieved. It is not practical to provide a client device such as a small-size mobile telephone with all possible encryption and compression systems.
4) Further, since it is necessary to provide both the client and the server with the same encryption and compression system, there are cases where extra cost is needed for the network to realize secure communications.
   There has been a technique to prevent the entire communication system including the network and terminals from eavesdropping, tampering, or message forgery, achieving secure communication. In such a communication system, it is possible to use a relatively low security level of encryption system providing small overhead in data communication between a client and a server because the entire communication system can provide a sufficient security level and efficient communication.
   However, when the opposite party of the communication is a terminal that is out of the secure communication system or the communication is performed via a network not providing secure communication, it is necessary to use a higher security level of encryption system providing larger overhead to achieve the same level of security.
5) When a user uses a plurality of terminals to access a server. the server cannot identify the user and therefore may refuse the access or, even if it can successfully identify the user, the cost of managing users may be increased. The reason is that different terminals are assigned different certifications. For example, assuming that user information is registered in the server such that the certification assigned to a single terminal of a user is used to identify the user, the server cannot identify the user when the same user uses another terminal assigned a different certification and therefore the access is refused. In order to identify the user when another terminal is used, it is necessary to register a plurality of certifications for the same user, resulting in increased management cost.
6) When the client delegates all the security processing to an intermediary device, it is possible that the server cannot identify the client. The reason is that the security protocol is terminated at the server and the intermediary device and therefore the server recognizes that the intermediary device requests a content from the server.

An object of the present invention is to provide a security protocol intermediary device and method in a client-server data communication system, ensuring high security and lightening load on the system and clients.

According to the present invention, a method for securing data communication between two computers, includes the steps of: providing an intermediary device between the two computers; and the intermediary device having at least one of predetermined security functions on behalf of one of the computers. The two computers may be a server and a client, wherein the intermediary device has said at least one of predetermined security functions on behalf of the client. The predetermined security functions include a server authentication function, a client authentication function, and an encryption and decryption function.

The intermediary device has at least the server authentication function of checking validity of a server certification by communicating with a certificate authority that has issued the server certification. In this case, the intermediary device sends a server authentication result to the client. The client determines from the server authentication result whether the server is authorized, without doing server authentication. When the server certification is valid, the intermediary device sends a server authentication message to the client, wherein the server authentication message includes an indicator indicating that the server authentication message is a local certification message, wherein the client determines from the indicator that the server authentication has been terminated.

Alternatively, when the server certification is valid, the intermediary device issues a new certification and sends a server authentication message including the new certification to the client, wherein the client determines whether the server is authorized, depending on whether the server authentication message is valid.

The intermediary device has at least the client authentication function of submitting a certification necessary for client authentication to the server.

The intermediary device has at least the encryption and decryption function of encrypting and decrypting data transferred between the server and the intermediary device. The encryption and decryption function may also encrypt and decrypt data transferred between the client and the intermediary device. A first encryption strength between the server and the intermediary device and a second encryption strength between the client and the intermediary device may be individually determined.

According to another aspect of the present invention, a method for transferring data between a server and a client via an intermediary device, includes the steps of: the intermediary device, a) storing in a management table security information indicating at least one security operation previously selected from server authentication, client authentication, and encryption and decryption, and session information regarding a session formed between the server and the client; b) receiving a message from one of the client and the server; and c) performing a security operation for the received message by referring to the management table.

The management table stores security information indicating at least the server authentication, and the step c) may include the steps of: c.1) when receiving the message from the client, determining whether the received message requests a server certification; c.2) when the received message requests a server certification, reading information of a certificate authority that has issued the server certification, from the received message; c.3) accessing the certificate authority according to the information of the certificate authority to determine whether the server certification is valid: and c.4) when the server certification is valid, sending a server authentication message to the client, wherein the client determines that the server authentication has been made when receiving the server authentication message.

The management table stores security information indicating at least the client authentication, and the step c) may include the steps of: c.1) when receiving the message from the server, determining whether the received message requests a client certification; c.2) when the received message requests a client certification, searching the session management table for a client certification of the client; and c.3) when the client certification of the client is found, sending a message including the client certification to the server.

The management table stores security information indicating at least the encryption and decryption and session information including encryption information for each session, and the step c) may include the steps of: c. 1) receiving a message including first encrypted data from one of the server and the client, wherein the first encrypted data is encrypted according to first encryption information; c.2) converting the first encrypted data to second encrypted data by referring to the management table, wherein the second encrypted data is encrypted according to second encryption information; and c.3) sending the second encrypted data to the other of the server and the client.

The management table stores security information indicating at least the encryption and decryption and session information including encryption information for each session, and the step c) may include the steps of: c.1) receiving a message including first encrypted data from the server, wherein the first encrypted data is encrypted according to encryption information including a secret key and a predetermined encryption method; c.2) converting the encrypted data to plain data by referring to the management table; c.3) sending the plain data to the client; c.4) receiving a message including plain data from the client: c.5) converting the plain data to second encrypted data by referring to the management table, wherein the second encrypted data is encrypted according to the encryption information: c.6) sending the second encrypted data to the server.

According to further aspect of the present invention. an intermediary device through which data is transferred between a server and a client, includes: a management table for storing security information indicating at least one security operation previously selected from server authentication, client authentication, and encryption and decryption, and session information regarding a session formed between the server and the client; and a processor section for performing a security operation for a received message by referring to the management table.

The management table stores security information indicating at least the server authentication. The processor section may include; a message interpreter for determining whether a message received from the client requests a server certification: an extractor for extracting information of a certificate authority that has issued the server certification. from the received message, when the received message requests the server certification; an authentication section for determining whether the server certification is valid by accessing the certificate authority according to the information of the certificate authority; and a message shaper for, when the server certification is valid, generating a server authentication message to be sent to the client, wherein the client determines that the server authentication has been made when receiving the server authentication message.

The management table stores security information indicating at least the client authentication. The processor section may include: a message interpreter for determining whether a message received from the server requests a client certification; a certification submission section for, when the received message requests a client certification, searching the session management table for a client certification of the client; and a message shaper for, when the client certification of the client is found, generating a message including the client certification to be sent to the server.

The management table stores security information indicating at least the encryption and decryption and session information including encryption information for each session. The processor section may include: a message interpreter for determining whether a message received from one of the server and the client includes first encrypted data that is encrypted according to first encryption information; an encryption converter for converting the first encrypted data to second encrypted data by referring to the management table, wherein the second encrypted data is encrypted according to second encryption information; and a message shaper for generating a message including the second encrypted data to the other of the server and the client.

As described above, according to the present invention, the following advantages are obtained.
1) The intermediary device can perform one or more appropriate function such as server and/or client authentication on behalf of the client depending on the communication environment between client and server. Accordingly, decline in the efficiency of communication in application level can be effectively suppressed.
2) The intermediary device can perform encryption and decryption necessary for security but with heavy load putting on a client on behalf of the client. Accordingly, even when the client has a relatively low processing power, reduction in throughput can be prevented.
3) The intermediary device can perform encryption and data compression on behalf of the client. Accordingly, even when the client and server are not provided with the same encryption method and data compression method, secure communication can be achieved.
4) The intermediary device can provide common encryption and data compression to the client and server. Accordingly, even when the client and server are not provided with the same encryption method and data compression method, secure communication can be achieved.
5) When the entire communication system including the network and terminals has a means for providing secure communication by preventing eavesdropping, tampering, or message forgery, it is possible to use a relatively low security level of encryption system providing small overhead in data communication between a client and a server to achieve a sufficient security level and efficient communication. Accordingly, secure communication can be achieved without extra cost.
6) Since the intermediary device can submit a client certification to the server in place of the client, it is possible to cause the server to recognize a different client terminal as the same user.
7) The intermediary device can send a packet received from the client to the server with its source address indicating the client. Accordingly, the server properly and reliably recognizes the client as the source.

Fig. 1 is a block diagram showing an intermediary device having a certification check function according to a first embodiment of the present invention:
Fig. 2 is a flow chart showing an operation of the intermediary device according to the first embodiment;
Fig. 3 is a diagram showing a sequence of handshake procedure in a client-server data communication system using the intermediary device according to the first embodiment;
Fig. 4 is a block diagram showing an intermediary device having an encryption/decryption function according to a second embodiment of the present invention;
Fig. 5 is a flow chart showing an operation of the intermediary device according to the second embodiment;
Fig. 6 is a diagram showing a sequence of handshake procedure in a client-server data communication system using the intermediary device according to the second embodiment;
Fig. 7 is a block diagram showing an intermediary device having a certification submission function according to a third embodiment of the present invention;
Fig. 8 is a flow chart showing an operation of the intermediary device according to the third embodiment;
Fig. 9 is a diagram showing a sequence of handshake procedure in a client-server data communication system using the intermediary device according to the third embodiment;
Fig. 10 is a block diagram showing an intermediary device according to a fourth embodiment of the present invention;
Fig. 11 is a diagram showing a sequence of handshake procedure in a client-server data communication system using the intermediary device according to the fourth embodiment;
Fig. 12 is a diagram showing a table provided in the intermediary device according to the fourth embodiment;
Fig. 13 is a diagram showing a sequence of handshake procedure in a client-server data communication system using the intermediary device when a session has been started, according to a fifth embodiment of the present invention: and
Fig. 14 is a diagram showing a sequence of TLS handshake procedure in a conventional client-server data communication system.

### First Embodiment

An intermediary device according to a first embodiment of the present invention will be described, taking as an example the case where the TLS Protocol is employed. The intermediary device according to the first embodiment has a function of checking the validity of a server certification as a substitute for a client.

### Structure

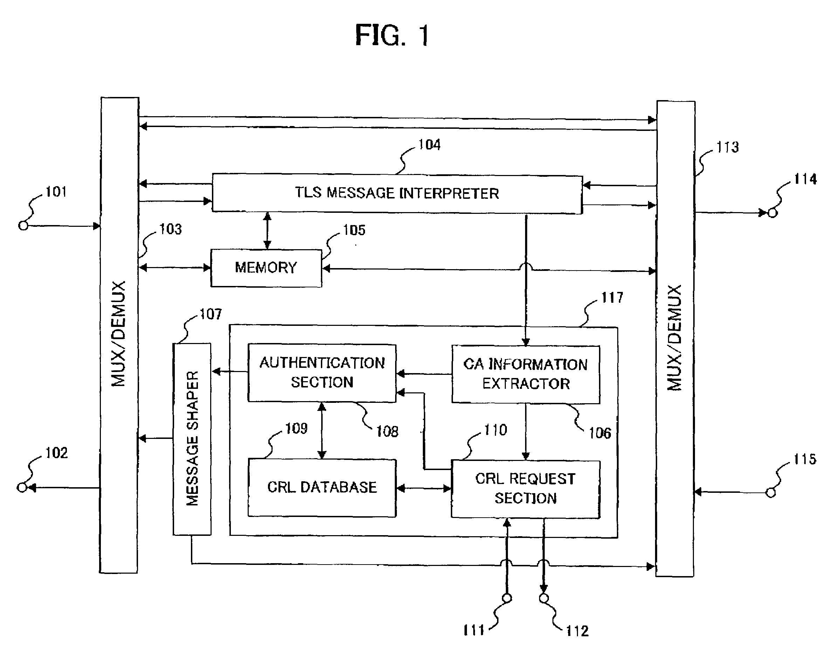

Referring to Fig. 1, it is assumed that an input terminal 101 and an output terminal 102 connected to a multiplexer and demultiplexer (hereinafter abbreviated as MUX/DEMUX) 103 are connected to a client side and an input terminal 115 and an output terminal 114 connected to a MUX/DEMUX 113 are connected to a server side.

The intermediary device is provided with a TLS message interpreter 104, a memory 105, a message shaper 107, and a certification check system 117 between the MUX/DEMUX 103 and the MUX/DEMUX 113. The certification check system 117 includes a CA information extractor 106, an authentication section 108, a CRL database 109, and a CRL request section 110. An input terminal 111 and an output terminal 112 connected to the CRL request section 110 are connected to a CA (Certificate Authority) side. It is not necessary for the memory 105 to be physically incorporated in the intermediary device. For example, the memory 105 may be installed in another node having communication and intermediary functions.

The memory 105 stores a session management table (not shown) and a client management table (not shown). The session management table is used to manage sessions and the client management table registers information indicating whether each client requests a certification check process from the intermediary device. When one of the MUX/DEMUXs 103 and 113 has received an input packet, the session management table is searched to determine whether the destination and source addressed and the port number of the input packet match an entry registered in the session management table. The MUX/DEMUX that received the input packet transfers the message included in the input packet to one of the other MUX/DEMUX and the TLS message interpreter 104 depending on whether a match is found in the session management table.

The TLS message interpreter 104 interprets an input TLS message to transfer it to an appropriate section depending on the type of the input TLS message and performs writing, changing, and deleting of information regarding a session of the client in the session management table of the memory 105. The message shaper 107 generates a TLS message from data received from the certification check system 117. If it is valid, the message shaper 107 transfers it to the MUX/DEMUX 103 and if invalid, to the MUX/DEMUX 113.

In the certification check system 117, the CA information extractor 106 extracts CA information from a certification of the server received from the TLS message interpreter 104 and transfers the CA information to the CRL request section 110 and the message to the authentication section 108. The CRL request section 110 uses the CA information to search the CRL database 109. When a valid CRL for the CA is not found, the CRL request section 110 requests CRL from the CA and stores received CRL into the CRL database 109. The authentication section 108 uses the CRL supplied from the CRL database 109 to check whether the certification included in the message received from the CA information extractor 106 is valid. The authentication section 108 transfers the check result and the message to the message shaper 107.

### Operation

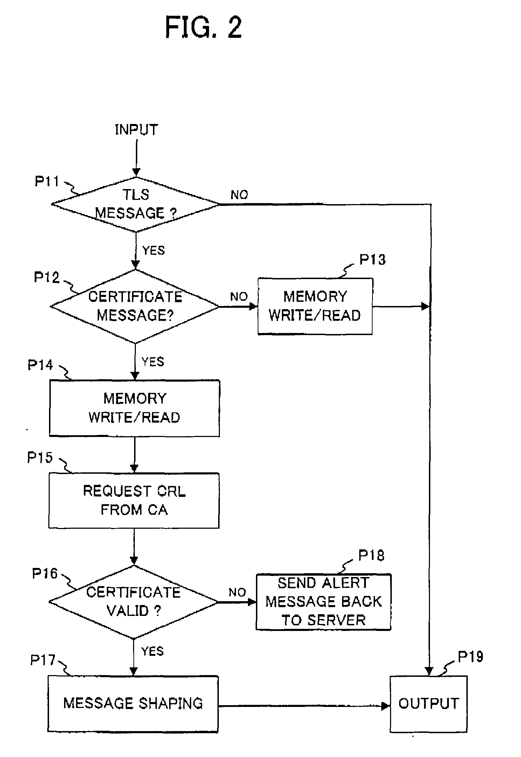

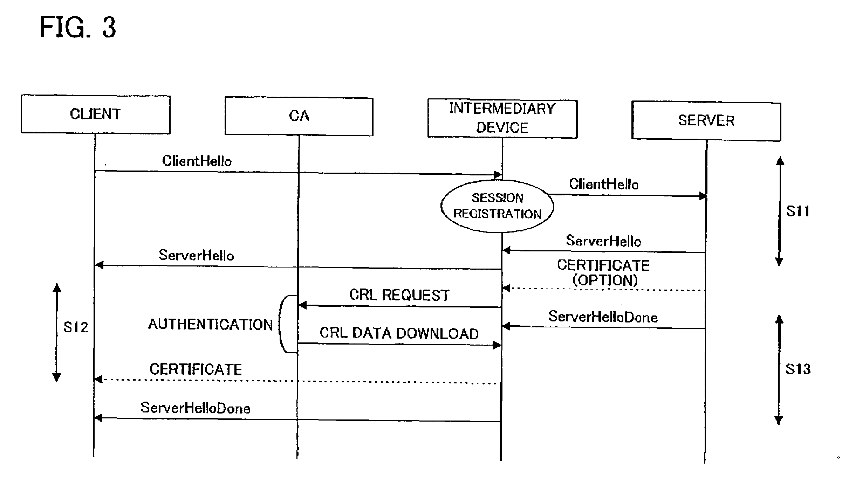

An operation of the first embodiment will be described with reference to Figs. 2 and 3, taking as an example the case of receiving a Certificate message from a server during Handshake procedure. Fig. 2 and Fig. 3 show the flow chart and the sequence of the operation, respectively.

### 1. ClientHello message

As shown in Fig. 3, a negotiation step S11 for exchanging necessary parameters for encryption and data compression between the client and the server is performed before exchanging data. In the negotiation step S11, when the client sends a packet including a ClientHello message to the server, the intermediary device receives the packet before the server does.

In the intermediary device, the input packet is transferred from the input terminal 101 to the MUX/DEMUX 103, which determines whether the input packet includes a TLS message. The MUX/DEMUX 103 is designed to transfer an input packet to the TLS message interpreter 104 when the TLS message is included therein. More specifically, when the input packet is addressed to the port number "443" that is assigned to TLS, the MUX/DEMUX 103 transfers it to the TLS message interpreter 104 and otherwise to the MUX/DEMUX 113.

Referring to Fig. 2, the MUX/DEMUX 103 determines whether the input packet includes a TLS message (step P11). When it include the TLS message (YES at step P11), the TLS message interpreter 104 determines whether the received TLS message is a Certificate message (step P12).

When the received TLS message is a ClientHello message (NO at step P12), the TLS message interpreter 104 performs registration of a session by writing the address and port number of the client and the address of the server, the TLS status indicating how much the Handshake procedure progresses, and the like into the session management table of the memory 105 (step P13). Accordingly, thereafter, the MUX/DEMUX 103 or 113 can determine whether the input packet includes a TLS message, by searching the session management table of the memory 105 using the addresses and port number of destination and source of the input packet as a key. When a match is found, it is determined that the input packet includes TLS message and then the input packet is transferred to the TLS message interpreter 104.

After session registration has been completed, the TLS message interpreter 104 transfers the input packet as it is to the MUX/DEMUX 113, which sends the packet to the server through the output terminal 114 (step P19).

When receiving the packet from the client via the intermediary device, the server sends a packet including the ServerHello message back to the client through the intermediary device. When the intermediary device receives the packet from the server, the MUX/DEMUX 113 checks the address and port number of destination of the packet to determine whether the received packet includes TLS message (step P11). Since this packet includes the ServerHello message (YES at step P11 and NO at step P12), it is transferred to the TLS message interpreter 104, which checks that the TLS session status of the ServerHello message is not contradictory to that registered in the session management table of the memory 105 before updating the TLS status indicating how much the Handshake procedure progresses (step P13).

After the TLS status has been updated, the TLS message interpreter 104 transfers the input packet including the ServerHello message as it is to the MUX/DEMUX 103, which sends it to the client through the output terminal 102 (step P19).

### 2. Certificate message

As shown in Fig. 3, when the server sends a packet including a Certificate message to the client, the intermediary device receives this packet before the client does.

In the intermediary device, the input packet is transferred from the input terminal 115 to the MUX/DEMUX 113, which determines whether the input packet includes a TLS message.

Referring to Fig. 2, the MUX/DEMUX 113 determines whether the input packet includes a TLS message (step P11). Since the input packet includes the Certificate message (YES at step P11 and step P12), it is transferred to the TLS message interpreter 104, which checks that the TLS session status of the Certificate message is not contradictory to that registered in the session management table of the memory 105 before updating the TLS status indicating how much the Handshake procedure progresses. Thereafter, the TLS message interpreter 104 searches the client management table of the memory 105 to determine whether the client requests a certification check process from the intermediary device (step P14). Here, the client requests the certification check process from the intermediary device.

The TLS message interpreter 104 transfers the Certificate message to the certification check system 117 to check whether the certification of the server is valid. As described before, CRL or OCSP may be used to check the validity of a certification. Here, CRL is used.

In the certification check system 117, the CA information extractor 106 extracts CA information from a certification of the server included in the Certificate message received from the TLS message interpreter 104. The Certificate message is further transferred to the authentication section 108 and the CA information is transferred to the CRL request section 110.

The CRL request section 110 inquires from the CRL database 109 whether CRL for the CA extracted by the CA information extractor 106 exists. When a valid CRL for the CA is not found or update time has elapsed, the CRL request section 110 sends a packet including a message requesting CRL from the CA that issued the certification of the server through the output terminal 112 (step P15). When receiving a response packet including CRL from the CA, the CRL request section 110 adds the received CRL to the CRL database 109. When a valid CRL for the CA is found and the next update time has not come, the CRL request process is not performed because the registered CRL is the latest version. In this manner, the CRL database 109 holds the latest CRL for the CA.

Thereafter, the authentication section 108 uses the CRL supplied from the CRL database 109 to check whether the certification included in the message received from the CA information extractor 106 is valid (step P16). When it is valid (YES at step P16), the authentication section 108 transfers the Certificate message to the message shaper 107. The message shaper 107 generates a packet including a message to be sent to the client from the Certificate message (step P17).

An authentication result message is generated by 1) generating a new certification that replaces the CA with the intermediary device and then generating a message including the new certification, 2) generating a message including a server certification attached with extended information explicitly indicating that this certification is tentative, 3) generating a message informing the client only that the server certification is valid, and the like. The message shaper 107 uses one of these ways to generate a message indicating that the server certification is valid and then shapes it into a packet to be sent to the client through the MUX/DEMUX 103 and the output terminal 102 (step P19).

When the server certification is not valid (NO at step P16), the message shaper 107 creates a packet including an Alert message and sends it to the client and the server (step P18).

As described above, the intermediary device informs the client of the validity of a server certification without the client inquiring the CA, resulting reduced load on the client and the client-server network system.

### Second Embodiment

An intermediary device according to a second embodiment of the present invention will be described, taking as an example the case where the TLS Protocol is employed. The intermediary device according to the second embodiment has a function of encrypting and decrypting application data in data communication between a server and a client as a substitute for a client.

### Structure

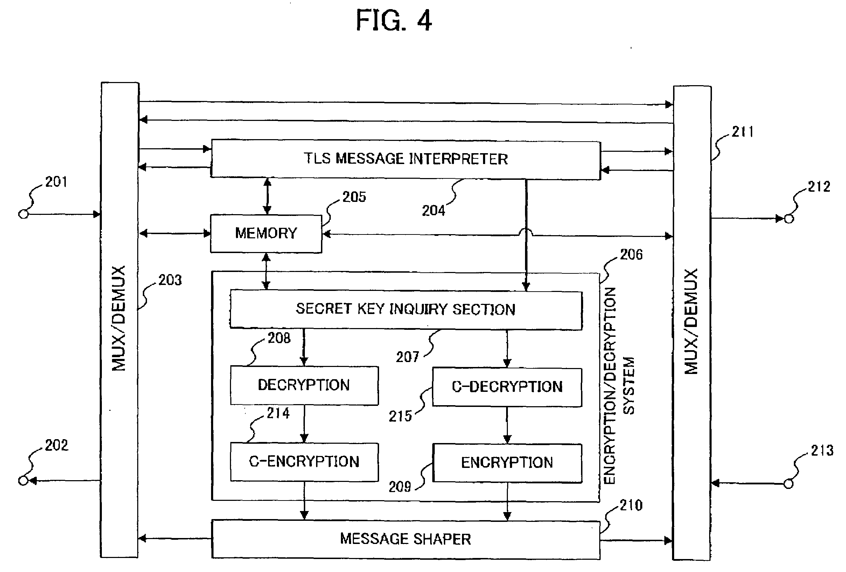

Referring to Fig. 4, it is assumed that an input terminal 201 and an output terminal 202 connected to a MUX/DEMUX 203 are connected to a client side and an input terminal 213 and an output terminal 212 connected to a MUX/DEMUX 211 are connected to a server side.

The intermediary device is provided with a TLS message interpreter 204, a memory 205, a message shaper 210, and a encryption and decryption system 206 between the MUX/DEMUX 203 and the MUX/DEMUX 211. The encryption and decryption system 206 includes a secret key inquiry section 207, a decryption section 208, a c-encryption section 214, a c-decryption section 215, and an encryption section 209. It is not necessary for the memory 205 to be physically incorporated in the intermediary device. For example, the memory 205 may be installed in another node having communication and intermediary functions.

The memory 205 stores a session management table (not shown) and a client management table (not shown). The session management table is used to manage sessions and the client management table registers information indicating whether each client requests an encryption and decryption process from the intermediary device. When one of the MUX/DEMUXs 203 and 211 has received an input packet, the session management table is searched to determine whether the destination and source addressed and the port number of the input packet match an entry registered in the session management table. The MUX/DEMUX that received the input packet transfers the message included in the input packet to one of the other MUX/DEMUX and the TLS message interpreter 204 depending on whether a match is found in the session management table.

The TLS message interpreter 204 interprets an input TLS message to transfer it to an appropriate section depending on the type of the input TLS message and performs writing. changing, and deleting of information regarding a session of the client in the session management table of the memory 205. The message shaper 210 generates a TLS message from data received from the encryption and decryption system 206 and transfers it to one of the MUX/DEMUXs 203 and 211 depending on the destination thereof.

In the encryption and decryption system 206, the secret key inquiry section 207 uses the data received from the TLS message interpreter 204 to request session information of the client from the memory 205. Further, the secret key inquiry section 207 looks at the destination of the data and transfers the packet to one of the encryption section 208 and the c-decryption section 215 depending on the destination. The decryption section 208 decrypts the server-encrypted data that was encrypted in the server using the secret key. The c-decryption section 215 decrypts the client-encrypted data that was encrypted in the client. The c-encryption section 214 encrypts data so that the client can decrypt the encrypted data. The encryption section 209 encrypts data so that the server can decrypt the encrypted data using the secret key.

### Operation

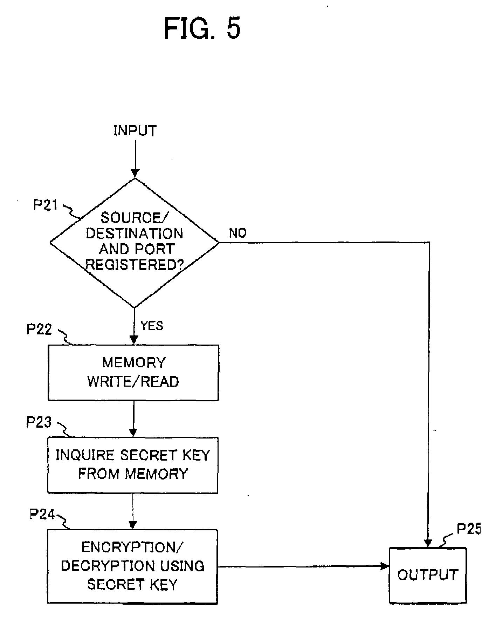

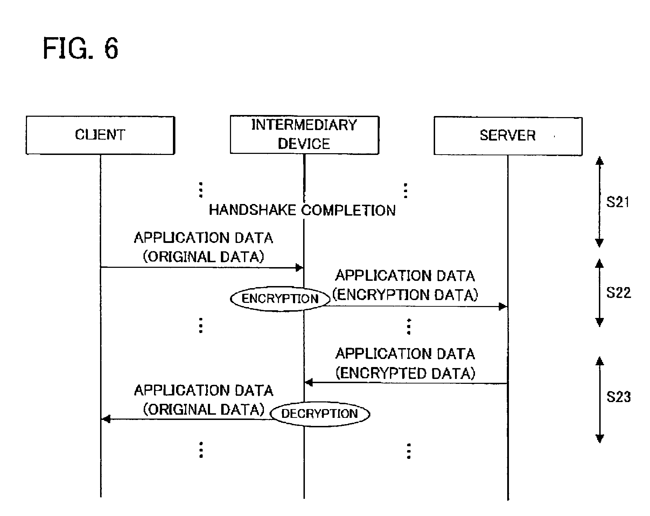

An operation of the second embodiment will be described with reference to Figs. 5 and 6. Here, the operation after the TLS handshake procedure has been completed will be described.

As shown in Fig. 6, when the TLS handshake procedure S21 has been completed, it is assumed that the addresses and port numbers of the client and the server, encryption information including secret key and encryption method between the server and the intermediary device are stored in the memory 205. When data encryption and decryption are performed between the client and the intermediary device, the secret key required for the data encryption and decryption is also stored in the memory 205.

In the case where insecure application data are sent from the client to the server (step S22), the intermediary device receives packets before the server.

In the intermediary device, an input packet is transferred from the input terminal 201 to the MUX/DEMUX 203. The MUX/DEMUX 203 accesses the memory 205 to determine whether a set of the source and destination addresses and port numbers of the input packet match that registered in the session management table of the memory 205 (step P21). When they match (YES at step P21), the input packet is transferred to the TLS message interpreter 204. The other packets are transferred to the MUX/DEMUX 211. The TLS message interpreter 204 checks whether the TLS message is not contradictory to a corresponding entry status registered in the session management table of the memory 105 (step P22). When no contradictory, the data is transferred to the encryption and decryption system 206.

When the encryption and decryption system 206 has received the data, the secret key inquiry section 207 searches the session management table of the memory 205 using a set of the source and destination addresses and port numbers of the input data as a key and finds a secret key required for encryption (step P23). Thereafter, the secret key inquiry section 207 transfers the data, the secret key, and the encryption method to the c-decryption section 215. Since the data is no secure, the c-decryption section 215 transfers it to the encryption section 209. The encryption section 209 encrypts the data using the secret key according to the encryption method (step P24). In this way, the original insecure application data, or plain data, received from the client is converted to secure application data. The secure application data is packetized by the message shaper 210 and then is sent to the server through the MUX/DEMUX 211 and the output terminal 212 (step P25).

On the other hand, in the case where secure application data are sent from the server to the client (step S23), the intermediary device receives packets before the client.

In the intermediary device, an input packet is transferred from the input terminal 213 to the MUX/DEMUX 211. The MUX/DEMUX 211 accesses the memory 205 to determine whether a set of the source and destination addresses and port numbers of the input packet match that registered in the session management table of the memory 205 (step P21). When they match (YES at step P21), the input packet is transferred to the TLS message interpreter 204. The other packets are transferred to the MUX/DEMUX 203. The TLS message interpreter 204 checks whether the TLS message is not contradictory to a corresponding entry status registered in the session management table of the memory 105 (step P22). When no contradictory, the data is transferred to the encryption and decryption system 206.

When the encryption and decryption system 206 has received the data, the secret key inquiry section 207 searches the session management table of the memory 205 using a set of the source and destination addresses and port numbers of the input data as a key and finds a secret key required for decryption (step P23). Thereafter, the secret key inquiry section 207 transfers the data, the secret key, and the encryption method to the decryption section 208. The decryption section 208 decrypts the secure data using the secret key and the registered encryption method (step P24). The decryption section 208 also transfers the decrypted data to the c-encryption section 214. Since this application data is insecure, the c-encryption section 214 transfers it as it is to the message shaper 210. The insecure application data is packetized by the message shaper 210 and then is sent to the client through the MUX/DEMUX 203 and the output terminal 202 (step P25).

In the above case, insecure data packets are transferred between the client and the intermediary device. Alternatively, secure data packets may be transferred between the client and the intermediary device using a predetermined security protocol. which may be the same as or different from the security protocol used between the intermediary device and the server. The encryption strength used between the client and the intermediary device is equal to or different from that used between the intermediary device and the server. In this case, when data packets flows from the client to the server, after the processing of the secret key inquiry section 207, the c-decryption section 215 decrypts the data encrypted by the client and transfers the decrypted data to the encryption section 209. When data packets flows from the server to the client, after the processing of the decryption section 208, the c-encryption section 214 encrypts the data and the encrypted data will be decrypted by the client. In this manner, the intermediary device can perform encryption and decryption processing.

### Third Embodiment

An intermediary device according to a third embodiment of the present invention will be described, taking as an example the case where the TLS Protocol is employed. The intermediary device according to the third embodiment has a function of submitting a client certification to the server as a substitute for a client.

### Structure

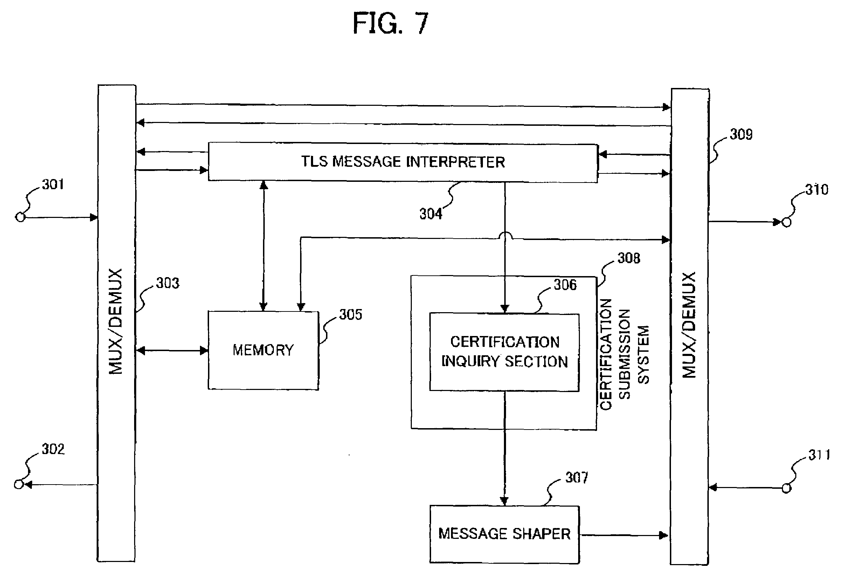

Referring to Fig. 7, it is assumed that an input terminal 301 and an output terminal 302 connected to a MUX/DEMUX 303 are connected to a client side and an input terminal 311 and an output terminal 310 connected to a MUX/DEMUX 309 are connected to a server side.

The intermediary device is provided with a TLS message interpreter 34, a memory 305, a message shaper 307, and a certification submission system 308 between the MUX/DEMUX 303 and the MUX/DEMUX 309. The certification submission system 308 includes a certification inquiry section 306. It is not necessary for the memory 305 to be physically incorporated in the intermediary device. For example, the memory 305 may be installed in another node having communication and intermediary functions.

The memory 305 stores a session management table (not shown) and a client management table (not shown). The session management table is used to manage sessions and the client management table registers information indicating whether each client requests a certification submission process from the intermediary device. When one of the MUX/DEMUXs 303 and 309 has received an input packet, the session management table is searched to determine whether the destination and source addressed and the port number of the input packet match an entry registered in the session management table. The MUX/DEMUX that received the input packet transfers the message included in the input packet to one of the other MUX/DEMUX and the TLS message interpreter 204 depending on whether a match is found in the session management table.

The TLS message interpreter 304 interprets an input TLS message to transfer it to an appropriate section depending on the type of the input TLS message and performs writing, changing, and deleting of information regarding a session of the client in the session management table of the memory 305. The message shaper 307 generates a TLS message from data received from the certification submission system 308 and transfers it to the MUX/DEMUX 309.

The certification inquiry section 306 inquires the certification for the client from the memory 305 and transfers the inquiry result to the message shaper 307.

### Operation

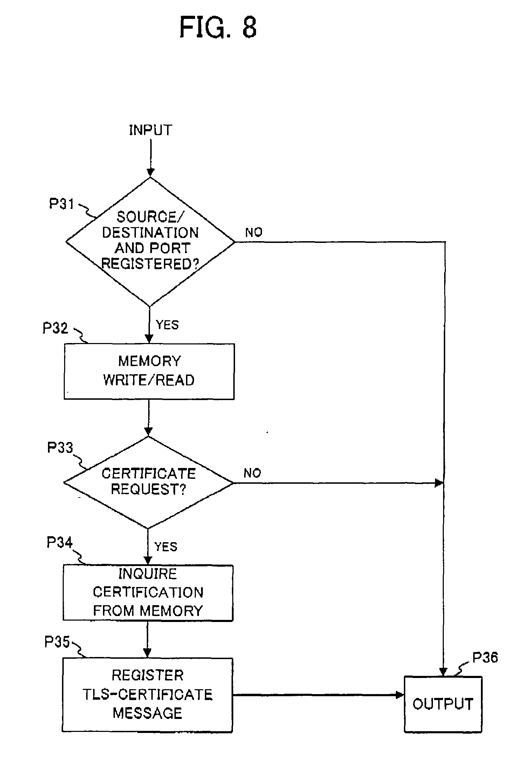

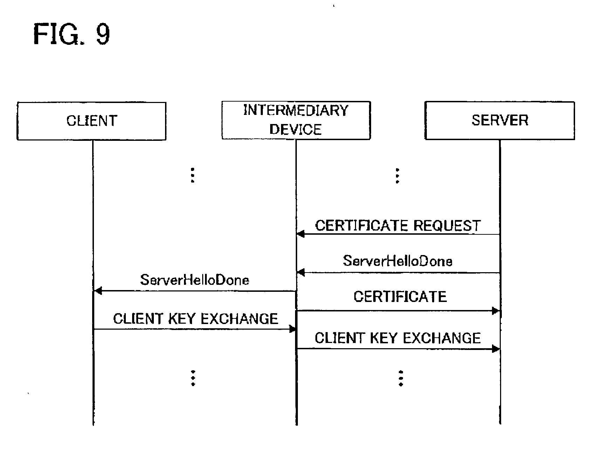

An operation of the third embodiment will be described with reference to Figs. 8 and 9. Here, the operation after the server has sent a ServerHello message in response to a ClientHello message received from the client in the TLS handshake procedure Will be described.

As shown in Fig. 8, when a packet including TLS message has been received from the server, the input packet is transferred from the input terminal 311 to the MUX/DEMUX 309. The MUX/DEMUX 309 accesses the memory 305 to determine whether a set of the source and destination addresses and port numbers of the input packet match that registered in the session management table of the memory 305 (step P31). When they match (YES at step P31), the input packet is transferred to the TLS message interpreter 304. The other packets are transferred to the MUX/DEMUX 303. The TLS message interpreter 304 checks whether the TLS message is not contradictory to a corresponding entry status registered in the session management table of the memory 305. When no contradictory, the status is updated (step P32). If it is a CertificateRequest message (YES at step P33), then it is transferred to the certification submission system 308. If it is not the CertificateRequest message (NO at step P33), it is transferred to the MUX/DEMUX 303.

In the certification submission system 308, the certification inquiry section 306 searches the session management table of the memory 205 using a set of the source and destination addresses and port numbers of the received message as a key and finds a client certification (step P34). In this case, it is assumed that the client certification is extracted from the client management table when the ClientHello message has been received by the intermediary device and the client certification was registered already when an entry is added to the session management table. The certification inquiry section 306 transfers the client certification to the message shaper 307. Thereafter, the message shaper 307 generates a packet including a Certificate message (step P35) and sends it to the server through the MUX/DEMUX 309 and the output terminal 310 (step P36). In this manner, the intermediary device can submit a client certification to the server as a substitute of the client.

### Fourth Embodiment

An intermediary device according to a fourth embodiment of the present invention will be described, taking as an example the case where the TLS Protocol is employed. The intermediary device according to the fourth embodiment has a combination of previously selected functions of security protocol as a substitute for a client.

### Structure

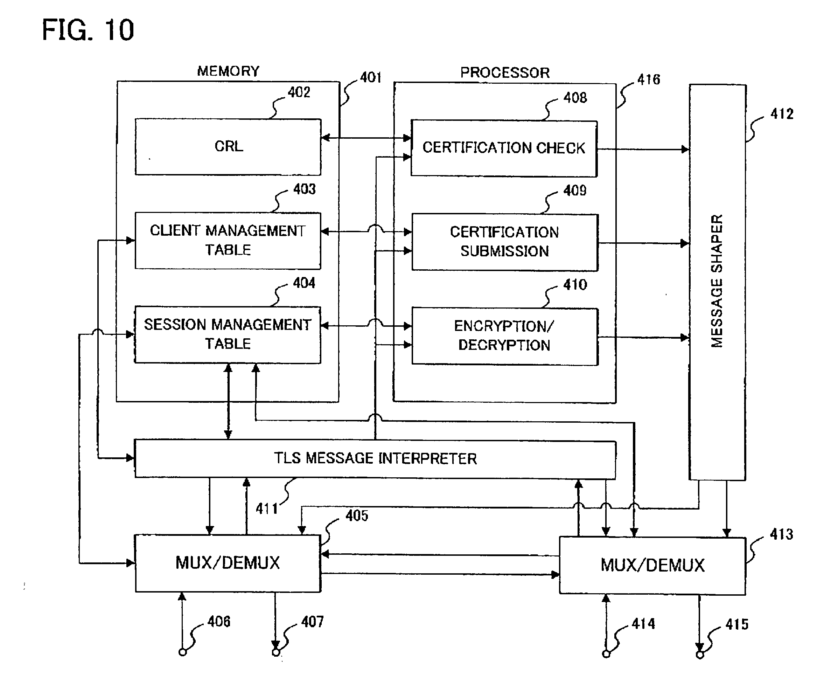

Referring to Fig. 10, it is assumed that an input terminal 406 and an output terminal 407 connected to a MUX/DEMUX 405 are connected to a client side and an input terminal 414 and an output terminal 415 connected to a MUX/DEMUX 413 are connected to a server side.

The intermediary device is provided with a memory 401 storing CRL 402, a client management table 403, and a session management table 404, a TLS message interpreter 411, a message shaper 412, and a processor system 416 including a certification check section 408, a certification submission section 409, and an encryption and decryption system 410 between the MUX/DEMUX 405 and the MUX/DEMUX 413. It is not necessary for the memory 401 to be physically incorporated in the intermediary device. For example, the memory 205 may be installed in another node having communication and intermediary functions.

The CRL 402 stores a CRL list. The client management table 403 registers information indicating which service each client previously requests from the intermediary device among services provided by the intermediary device.

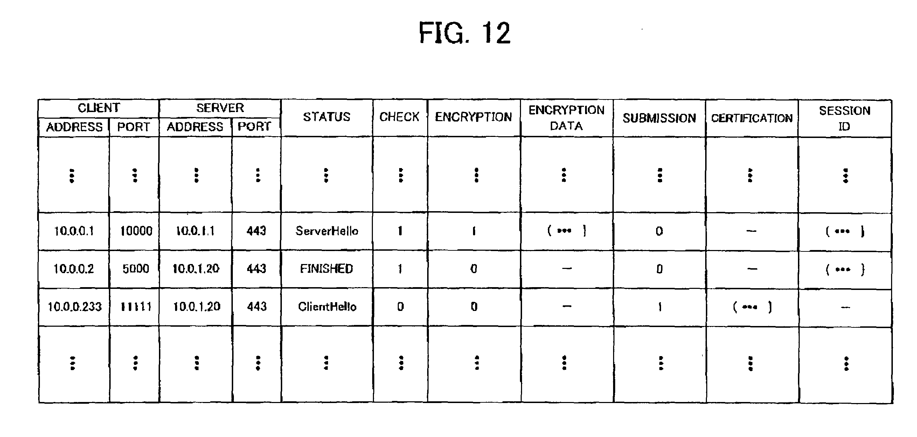

The session management table 404 is used to manage sessions that are now being used and can be added, updated, or deleted by the TLS message interpreter 411. Fig. 12 shows an example of the session management table 404.

The certification check section 408, the certification submission section 409, and the encryption and decryption system 410 are provided with the same functions as described in the first to third embodiments. Accordingly, the details of these functions will be omitted.

When one of the MUX/DEMUXs 405 and 413 has received an input packet, the session management table 404 is searched to determine whether the destination and source addressed and the port number of the input packet match an entry registered in the session management table 404. The MUX/DEMUX that received the input packet transfers the message included in the input packet to one of the other MUX/DEMUX and the TLS message interpreter 411 depending on whether a match is found in the session management table.

The TLS message interpreter 411 interprets an input TLS message to transfer it to an appropriate section depending on the type of the input TLS message and performs writing, changing, and deleting of information regarding a session of the client in the session management table 404 of the memory 401. The message shaper 412 generates a TLS message from data received from the processor system 416 and transfers it to one of the MUX/DEMUXs 405 and 413 depending on the destination thereof.

### Operation

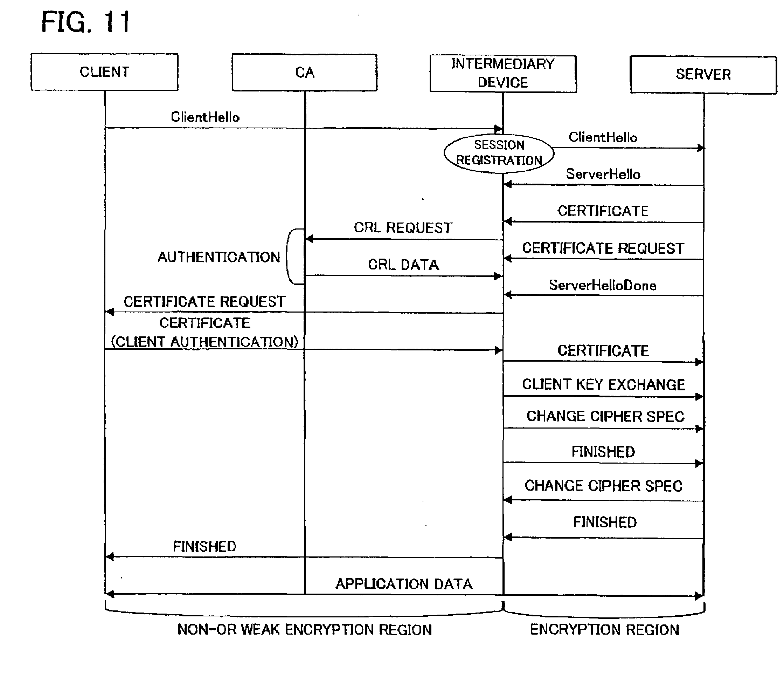

An operation of the fourth embodiment will be described with reference to Figs. 11 and 12. When the client sends a message to the server, the intermediary device receives the packet before the server.

In the intermediary device, the input packet is transferred from the input terminal 406 to the MUX/DEMUX 405, which determines whether the input packet includes a TLS message. The MUX/DEMUX 405 is designed to transfer an input packet to the TLS message interpreter 411 when the input packet is addressed to the port number "443" that is assigned to TLS. Accordingly, the MUX/DEMUX 405 transfers the TLS message to the TLS message interpreter 411.

The TLS message interpreter 411 interprets the TLS message and, when starting a session, reads predetermined service setting of the intermediary device for the client requesting the session, from the client management table 403 and registers them in the session management table 404 (session registration). As described before, one or more service setting of the intermediary device is previously determined by the client. For example, when the certification check and the certification submission are selected and set by the client, these security functions are delegated to the intermediary device as described before.

When receiving a TLS message, the TLS message interpreter 411 reads information of relevant entry from the session management table 404, updates the status, and transfers a received message to one of the certification check section 408, the certification submission section 409, the encryption and decryption section 410, and the message shaper 412, depending on the received message to be processed according to the information. Each section performs a corresponding function, that is, certification check, certification submission, or encryption/decryption. These sections access the CRL 402, the client management table 403, and the session management table 404 as appropriate to read necessary information. The data processed by each section is packetized by the message shaper 412 to produce packets including TLS messages. These packets are transferred to the MUS/DEMUX 413 and are sent to the server through the output terminal 415.

Similarly, when a message is sent from the server to the client, the TLS message interpreter 411 transfers an appropriate message to one of the certification check section 408, the certification submission section 409, the encryption and decryption system 410, and the message shaper 412, depending on the client's setting. After the processing of these sections 408-410, the message is sent to the client through the message shaper 412, the MUS/DEMUX 405, and the output terminal 407. In this manner, the intermediary device can provide TLS functions in place of the client.

A client can freely select one or more of the certification check section 408. the certification submission section 409, the encryption and decryption section 410 to delegate selected functions to the intermediary device. All functions may be delegated to the intermediary device.

For example, the sequence of Fig. 11 shows the TLS handshake procedure in the case where the certification check (authentication) and the encryption/decryption are delegated to the intermediary device and the certification submission is performed by the client itself.

### Fifth Embodiment

An intermediary device according to a fifth embodiment of the present invention will be described, taking as an example the case where a client requests a new connection to a server after the session with the server has been established. The intermediary device according to the fifth embodiment has a combination of previously selected functions of security protocol as a substitute for a client. The structure of the intermediary device is the same as that of the fourth embodiment as shown in Fig. 10 and therefore the descriptions are omitted. Here, it is assumed that the intermediary device provides the encryption and decryption function as described before.

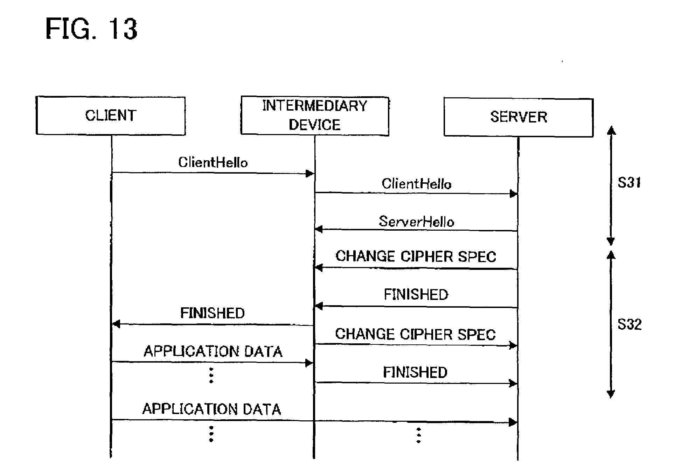

In step S31 as shown in Fig. 13, a session has been established between the client and the server and, in such a state, the client requests a new connection to the same sever by sending a packet including a ClientHello message having the same session ID to the server. When receiving the packet including the ClientHello message, the intermediary device adds a new entry to the session management table 404 and transfers the packet to the server. An example of the session management table 404 is shown in Fig. 12.

When receiving the ClientHello message having the same session ID, the server can know the encryption information used in the same session with the client. The server sends a ServerHello message including the same session ID back to the client. When receiving the ServerHello message, the intermediary device knows from the ServerHello message that a new connection is requested on the existing session between the client and the server.

Thereafter, in step S32, messages are exchanged according to the encryption and its key that have been already determined under mutual agreement. More specifically, when receiving packets including ChangeCipherSpec and Finished messages from the server, similarly to the first request, the intermediary device sends a packet including a Finished message to the client and packets including ChangeCipherSpec and Finished messages to the server.

When receiving the packet including a Finished message, the client determines that the handshake procedure is terminated and starts sending application data. The intermediary device buffers a message received from the client until the packet including a Finished message has been received from the server. When it has been received from the server, the intermediary device encrypts the buffered message to send the encrypted message to the server. Thereafter, encrypted data is normally exchanged to perform normal data communication between the client and the server.

## Claims

1. A method for securing data communication between two computers, comprising the steps of:
providing an intermediary device between the two computers;
**characterized by**
the intermediary device having at least one of predetermined security functions on behalf of one of the computers.

2. The method according to claim 1, wherein the two computers are a server and a client, wherein the intermediary device has said at least one of predetermined security functions on behalf of the client.

3. The method according to claim 2, wherein the predetermined security functions include a server authentication function, a client authentication function, and an encryption and decryption function.

4. The method according to claim 3, wherein the intermediary device has at least the server authentication function of checking validity of a server certification by communicating with a certificate authority that has issued the server certification.

5. The method according to claim 4, further comprising the steps of:
the intermediary device sending a server authentication result to the client; and
the client determining from the server authentication result whether the server is authorized, without doing server authentication.

6. The method according to claim 5, wherein, when the server certification is valid, the intermediary device sends a server authentication message to the client, wherein the server authentication message includes an indicator indicating that the server authentication message is a local certification message,
wherein the client determines from the indicator that the server authentication has been terminated.

7. The method according to claim 5, wherein, when the server certification is valid, the intermediary device issues a new certification and sends a server authentication message including the new certification to the client,
wherein the client determines whether the server is authorized, depending on whether the server authentication message is valid.

8. The method according to claim 7, wherein the client communicates with the intermediary device to determine whether the server authentication message is valid.

9. The method according to claim 5, wherein, when the server certification is not valid, the intermediary device sends an alert message to both the client and the server.

10. The method according to claim 3, wherein the intermediary device has at least the client authentication function of submitting a certification necessary for client authentication to the server.

11. The method according to claim 3, wherein the intermediary device has at least the encryption and decryption function of encrypting and decrypting data transferred between the server and the intermediary device.

12. The method according to claim 11, wherein the encryption and decryption function also encrypts and decrypts data transferred between the client and the intermediary device.

13. The method according to claim 12, wherein a first encryption strength between the server and the intermediary device and a second encryption strength between the client and the intermediary device are individually determined.

14. The method according to claim 11, wherein a secure session has been registered between the server and the client through the intermediary device, the method further comprising the steps of:
the client sending a connection request for a new connection on the secure session to the server;
when receiving the connection request from the client, the intermediary device performing negotiation with the server to establish the new connection on behalf of the client.

15. A method for transferring data between a server and a client via an intermediary device, **characterized by** the steps of:
at the intermediary device,
a) storing in a management table
security information indicating at least one security operation previously selected from server authentication, client authentication, and encryption and decryption, and
session information regarding a session formed between the server and the client;
b) receiving a message from one of the client and the server; and
c) performing a security operation for the received message by referring to the management table.

16. The method according to claim 15, wherein the management table stores security information indicating at least the server authentication, and
the step c) comprises the steps of:
c.1) when receiving the message from the client, determining whether the received message requests a server certification;
c.2) when the received message requests a server certification, reading information of a certificate authority that has issued the server certification, from the received message;
c.3) accessing the certificate authority according to the information of the certificate authority to determine whether the server certification is valid; and
c.4) when the server certification is valid, sending a server authentication message to the client, wherein the client determines that the server authentication has been made when receiving the server authentication message.

17. The method according to claim 16, wherein in the step c.4), the server authentication message includes an indicator indicating that the server authentication message is a temporary certification message.

18. The method according to claim 16, wherein the step c.4) comprises the steps of:
when the server certification is valid, issuing a new certification certifying that the server certification is valid: and
sending a server authentication message including the new certification to the client.

19. The method according to claim 15, wherein the management table stores security information indicating at least the client authentication, and
the step c) comprises the steps of:
c.1) when receiving the message from the server, determining whether the received message requests a client certification;
c.2) when the received message requests a client certification, searching the session management table for a client certification of the client; and
c.3) when the client certification of the client is found, sending a message including the client certification to the server.

20. The method according to claim 15. wherein the management table stores security information indicating at least the encryption and decryption and session information including encryption information for each session, and
the step c) comprises the steps of:
c.1) receiving a message including first encrypted data from one of the server and the client, wherein the first encrypted data is encrypted according to first encryption information;
c.2) converting the first encrypted data to second encrypted data by referring to the management table, wherein the second encrypted data is encrypted according to second encryption information; and
c.3 sending the second encrypted data to the other of the server and the client.

21. The method according to claim 20, wherein the first encrypted data is transferred between the server and the intermediary device, and the second encrypted data is transferred between the intermediary device and the client, wherein the first encryption information is identical to the second encryption information.

22. The method according to claim 20, wherein the first encrypted data is transferred between the server and the intermediary device, and the second encrypted data is transferred between the intermediary device and the client, wherein the first encryption information is different from the second encryption information.

23. The method according to claim 22, wherein an encryption strength of the first encryption information is stronger than that of the second encryption information.

24. The method according to claim 15, wherein the management table stores security information indicating at least the encryption and decryption and session information including encryption information for each session, and
the step c) comprises the steps of:
c.1) receiving a message including first encrypted data from the server, wherein the first encrypted data is encrypted according to encryption information including a secret key and a predetermined encryption method;
c.2) converting the encrypted data to plain data by referring to the management table;
c.3) sending the plain data to the client;
c.4) receiving a message including plain data from the client;
c.5) converting the plain data to second encrypted data by referring to the management table, wherein the second encrypted data is encrypted according to the encryption information;
c.6) sending the second encrypted data to the server.

25. A system for securing data communication between a server and a client, comprising;
an intermediary device between the server and the client,
**characterized by** the intermediary device having at least one of a server authentication function, a client authentication function, and an encryption and decryption function on behalf of one of the computers.

26. The system according to claim 25, wherein the intermediary device has at least the server authentication function of checking validity of a server certification by communicating with a certificate authority that has issued the server certification.

27. The system according to claim 25, wherein the intermediary device has at least the client authentication function of submitting a certification necessary for client authentication to the server.

28. The system according to claim 25, wherein the intermediary device has at least the encryption and decryption function of encrypting and decrypting data transferred between the server and the intermediary device.

29. The system according to claim 28, wherein the encryption and decryption function also encrypts and decrypts data transferred between the client and the intermediary device.

30. The system according to claim 29, wherein a first encryption strength between the server and the intermediary device and a second encryption strength between the client and the intermediary device are individually determined.

31. The system according to claim 30, wherein the first encryption strength is stronger than the second encryption strength.

32. A data communication system using a security protocol, comprising
a server;
a client:
an intermediary device through which data is transferred between the server and the client,
wherein the intermediary device comprises:
a management table (403, 404) for storing security information indicating at least one security operation previously selected from server authentication, client authentication, and encryption and decryption, and session information regarding a session formed between the server and the client; and
a processor section (405. 411. 413, 416) for performing a security operation for a received message by referring to the management table.

33. An intermediary device through which data is transferred between a server and a client, comprises;
a management table for storing security information indicating at least one security operation previously selected from server authentication, client authentication, and encryption and decryption, and session information regarding a session formed between the server and the client; and
a processor section for performing a security operation for a received message by referring to the management table.

34. The intermediary device according to claim 33, wherein
the management table (105) stores security information indicating at least the server authentication, and
the processor section comprises:
a message interpreter (104) for determining whether a message received from the client requests a server certification;
an extractor (106) for extracting information of a certificate authority that has issued the server certification, from the received message, when the received message requests the server certification;
an authentication section (108-110) for determining whether the server certification is valid by accessing the certificate authority according to the information of the certificate authority; and
a message shaper (107) for, when the server certification is valid, generating a server authentication message to be sent to the client, wherein the client determines that the server authentication has been made when receiving the server authentication message.

35. The intermediary device according to claim 34, wherein the server authentication message includes an indicator indicating that the server authentication message is a temporary certification message.

36. The intermediary device according to claim 34, wherein, when the server certification is valid, the authentication section issues a new certification certifying that the server certification is valid, and the message shaper generates a server authentication message including the new certification to be sent to the client.

37. The intermediary device according to claim 33, wherein
the management table (305) stores security information indicating at least the client authentication, and
the processor section comprises:
a message interpreter (304) for determining whether a message received from the server requests a client certification;
a certification submission section (308) for, when the received message requests a client certification, searching the session management table for a client certification of the client: and
a message shaper (307) for, when the client certification of the client is found, generating a message including the client certification to be sent to the server.

38. The intermediary device according to claim 33, wherein
the management table (205) stores security information indicating at least the encryption and decryption and session information including encryption information for each session, and
the processor section comprises:
a message interpreter (204) for determining whether a message received from one of the server and the client includes first encrypted data that is encrypted according to first encryption information;
an encryption converter (206) for converting the first encrypted data to second encrypted data by referring to the management table, wherein the second encrypted data is encrypted according to second encryption information: and
a message shaper (210) for generating a message including the second encrypted data to the other of the server and the client.

39. The intermediary device according to claim 38, wherein the first encrypted data is transferred between the server and the intermediary device, and the second encrypted data is transferred between the intermediary device and the client, wherein the first encryption information is identical to the second encryption information.

40. The intermediary device according to claim 38, wherein the first encrypted data is transferred between the server and the intermediary device, and the second encrypted data is transferred between the intermediary device and the client, wherein the first encryption information is different from the second encryption information.

41. The intermediary device according to claim 40, wherein an encryption strength of the first encryption information is stronger than that of the second encryption information.

42. The intermediary device according to claim 38, wherein the first encrypted data is transferred between the server and the intermediary device, and the second encrypted data is transferred between the intermediary device and the client, wherein the second encrypted data is decrypted data of the first encrypted data.

43. A computer program instructing an intermediary device for transferring data between a server and a client, the program **characterized by** the steps of:
a) storing in a management table
security information indicating at least one security operation previously selected from server authentication, client authentication, and encryption and decryption, and
session information regarding a session formed between the server and the client;
b) receiving a message from one of the client and the server; and
c) performing a security operation for the received message by referring to the management table.

44. A recording medium storing a computer program instructing an intermediany device for transferring data between a server and a client, the program **characterized by** the steps of:
a) storing in a management table
security information indicating at least one security operation previously selected from server authentication, client authentication, and encryption and decryption, and
session information regarding a session formed between the server and the client;
b) receiving a message from one of the client and the server; and
c) performing a security operation for the received message by referring to the management table.
